Europäisches Patentamt

European Patent Office

Office européen des brevets

(19)

(11) Veröffentlichungsnummer: **0 083 781**
**B1**

(12) **EUROPÄISCHE PATENTSCHRIFT**

(45) Veröffentlichungstag der Patentschrift:
01.07.87

(21) Anmeldenummer: 82111932.5

(22) Anmeldetag: 23.12.82

(51) Int. Cl.⁴: **D 21 J 1/16,** C 08 F 2/22,
C 09 D 3/81

(54) Verfahren zur Herstellung einer Polymer-Dispersion.

(30) Priorität: 29.12.81 DE 3151813

(43) Veröffentlichungstag der Anmeldung:
20.07.83 Patentblatt 83/29

(45) Bekanntmachung des Hinweises auf die Patenterteilung:
01.07.87 Patentblatt 87/27

(84) Benannte Vertragsstaaten:
AT BE CH DE FR GB IT LI LU NL SE

(56) Entgegenhaltungen:
EP-A-0 009 772
FR-A-2 207 150
GB-A-1 466 660

*Die Akte enthält technische Angaben, die nach dem Eingang der Anmeldung eingereicht wurden und die nicht in dieser Patentschrift enthalten sind.*

(73) Patentinhaber: HOECHST AKTIENGESELLSCHAFT,
Postfach 80 03 20, D-6230 Frankfurt am Main 80
(DE)

(72) Erfinder: Zimmerschied, Klaus, Dr., Fasanenweg
19, D-6200 Wiesbaden (DE)
Erfinder: Rinno, Helmut, Dr., Goethestrasse 38,
D-6238 Hofheim am Taunus (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Herstellung einer Polymer-Dispersion durch Polymerisieren von mindestens zwei verschiedenen olefinisch ungesättigten Monomeren in einem wäßrigen Medium bei einer Temperatur von 30 bis 100°C in Gegenwart von radikalbildendem Polymerisationsinitiator, Emulgator, Schutzkolloid und gegebenenfalls Regler, sowie auf die nach diesem Verfahren erhältliche Polymer-Dispersion, die Verwendung dieser Polymer-Dispersion als Bindemittel und eine Glanzfarbe mit Gelstruktur auf der Grundlage dieser Polymer-Dispersion.

Es ist bekannt, daß Kunststoffdispersionen, die als dispergierte Phase Copolymere auf Basis von Acrylsäureestern und Methacrylsäureestern enthalten, als Bindemittel für lufttrocknende, wäßrige Lacke eingesetzt werden (vgl. Das Deutsche Malerblatt 5/78, Serien 367-369, und 8/79, Serien 664-666). Diese Dispersionslacke sind allerdings bezüglich Glanzgrad, rheologischem Verhalten (Streicheigenschaften, Verlauf, Gelstruktur) und Naßhaftung noch verbesserungsbedürftig; insbesondere ist eine Verbesserung der Gelstruktur wünschenswert.

Ferner ist bekannt, daß filmbildende Polymere, die in Wasser emulgierbare Homo- oder Copolymere von Vinylestern, Acryl- und Methacrylsäureestern, Styrol, Acrylnitril oder Butadien darstellen, die Grundlage von thixotropen wäßrigen Überzugsmitteln bilden (vgl. deutsche Patentschrift 1 242 306 = britische Patentschrift 922 456). Diese Überzugsmittel enthalten ein Titanchelat und als Schutzkolloid ein natürliches oder synthetisches, wasserlöslichen, hydroxylgruppenhaltiges organisches Kolloid, insbesondere Derivate von Stärke, Cellulose oder Polyvinylalkohol, z. B. Hydroxyethylcellulose und Natriumcarboxymethylcellulose. Die Herstellung der Polymerdispersion ist dort allerdings nicht beschrieben.

Die Herstellung wäßriger Polymer-Dispersionen durch Polymerisieren eines Monomergemisches, das zu mindestens 80 Prozent aus Acrylmonomeren und/oder Styrol besteht, in wäßriger Emulsion in Gegenwart eines Cellulosederivats ist ebenfalls bekannt (vgl. britische Patentschrift 1 466 660). Geeignete Cellulosederivate sind dabei Hydroxyethylcellulose und carboxymethylierte Hydroxyethylcellulose; die Cellulosederivate werden in einer Menge von 0,01 bis 10 Gewichtsprozent (bezogen auf Monomere) eingesetzt. Die Polymerisation muß in Gegenwart eines Reglers durchgeführt werden, der in einer Menge von 0,01 bis 10 Gewichtsprozent (bezogen auf Monomere) verwendet wird. Die Dispersionen eignen sich zur Herstellung von thixotropen Gemischen für die Anwendung als Farben, Klebstoffe und Beschichtungsmittel.

Schließlich ist auch die Herstellung von wäßrigen Polyacrylat-Dispersionen mit verbessertem Fließverhalten beschrieben (vgl. europäische Anmeldungsveröffentlichung 9772 = US-Patentschrift 4 265 796). Dabei werden die Monomeren in wäßriger Emulsion in Gegenwart von 0,01 bis 2 Gewichtsprozent Schutzkolloiden unter üblichen Bedingungen polymerisiert. Als Schutzkolloide werden insbesondere Hydroxyalkylcellulosen und auch Carboxymethylcellulosen verwendet. Bei der Polymerisation wird ein wasserlöslicher Regler in einer Menge von 0,05 bis 5 Gewichtsprozent in Vorlage und Zulauf eingesetzt. Die Dispersionen sollen gute Pigmentverträglichkeit und vorteilhaftes Fließverhalten aufweisen und sich als Bindemittel für Anstrichfarben eignen.

Aufgabe der Erfindung ist die Herstellung einer wäßrigen Polymer-Dispersion auf der Basis von Copolymeren mit einem überwiegenden Anteil an Estern der Acrylsäure und/oder Methacrylsäure, die zur Herstellung einer Farbe mit Gelstruktur geeignet ist.

Gegenstand der Erfindung ist ein Verfahren zur Herstellung einer Polymer-Dispersion durch Polymerisieren

a) eines Esters oder mehrerer Ester der Acrylsäure und/oder der Methacrylsäure mit einem 1 bis 10 Kohlenstoffatome aufweisenden Alkohol,

b) 0,1 bis 10 Gewichtsprozent (bezogen auf die Gesamtmonomermenge) mindestens einer wasserlöslichen, ungesättigten Carbonsäure oder eines wasserlöslichen Derivats einer ungesättigten Carbonsäure und

c) 0 bis 30 Gewichtsprozent (bezogen auf die Gesamtmonomermenge) mindestens einer von den vorgenannten Komponenten a) und b) verschiedenen monoolefinisch ungesättigten Verbindung

in einem wäßrigen Medium bei einer Temperatur von 30 bis 100°C in Gegenwart von radikalbildendem Polymerisationsinitiator, Emulgator, Schutzkolloid und gegebenenfalls Regler, das dadurch gekennzeichnet ist, daß man als Schutzkolloid wasserlösliche Carboxymethylcellulose mit einem mittleren Substitutionsgrad von 0,3 bis 0,65 verwendet.

Die Erfindung betrifft ferner die nach dem vorgenannten Verfahren erhältliche Copolymer-Dispersion und die Verwendung dieser Copolymer-Dispersion als Bindemittel für eine Glanzfarbe mit Gelstruktur.

Das wesentliche Merkmal der Erfindung ist die Anwendung wasserlöslicher Carboxymethylcellulose als Schutzkolloid. Der mittlere Substitutionsgrad der Carboxymethylcellulose beträgt 0,3 bis 0,65, vorzugsweise 0,4 bis 0,55, wobei unter Substitutionsgrad die durchschnittliche Anzahl der pro Anhydroglukoseeinheit eingeführten Carboxymethylgruppen verstanden wird. Die Viskosität einer 2-gewichtsprozentigen wäßrigen Lösung der Carboxymethylcellulose beträgt bei einer Temperatur von 25°C vorzugsweise 1 bis 10 000 mPa·s, insbesondere 5 bis 1000 mPa·s. Die Carboxymethylcellulose wird bevorzugt in Form ihres Alkalisalzes eingesetzt, z. B. als Natrium-, Kalium oder Ammoniumsalz. Zweckmäßigerweise wird sie in einer Menge von 0,05 bis 5, vorzugsweise 0,1 bis 2 Gewichtsprozent (bezogen auf die Gesamtmonomermenge) verwendet.

Die erfindungsgemäß verwendeten Celluloseether enthalten gegebenenfalls noch weitere Substituenten, insbesondere Alkyl- oder Hydroxyalkylreste mit 1 bis 4 Kohlenstoffatomen, Alkyloxyalkylreste mit 2 bis 6 Kohlenstoffatomen oder Dialkylaminoreste mit insgesamt 2 bis 6 Kohlenstoffatomen. Geeignete Verbindungen sind beispielsweise Methyl-carboxymethyl-cellulose, Ethyl-carboxymethyl-cellulose, Hydroxyethyl-carboxymethyl-cellulose, Hydroxypropyl-carboxymethyl-cellulose, Methyloxyethyl-carboxymethyl-cellulose, Ethyloxyethyl-carboxymethylcellulose und Diethylamino-carboxymethyl-cellulose.

Für das erfindungsgemäße Polymerisationsverfahren werden mindestens zwei Gruppen von Monomeren eingesetzt, nämlich

a) ein oder mehrere Ester der Acrylsäure und/oder der Methacrylsäure mit einem 1 bis 10 Kohlenstoffatome auf weisenden Alkohol,

b) 0,1 bis 10, vorzugsweise 0,5 bis 4 Gewichtsprozent (bezogen auf die Gesamtmonomermenge) mindestens einer wasserlöslichen, ungesättigten Mono- oder Dicarbonsäure oder eines wasserlöslichen Derivats einer ungesättigten Mono- oder Dicarbonsäure und

c) 0 bis 30, vorzugsweise 1 bis 15 Gewichtsprozent (bezogen auf die Gesamtmonomermenge) mindestens einer von den vorgenannten Komponenten a) und b) verschiedenen monoolefinisch ungesättigten Verbindung.

Die Monomeren der Gruppe a), die einzeln oder als Gemisch verwendet werden, umfassen sowohl "weichmachende" Monomere, d.h. Acrylsäureester und höhere Methacrylsäureester, als auch "hartmachende" Monomere, d.h. niedere Methacrylsäureester. Bei Verwendung von mehreren Monomeren wird der jeweilige Anteil der "weichmachenden" und "hartmachenden" Monomeren an der Gesamtmonomermenge so gewährt, daß die resultierende Dispersion eine Mindestfilmbildungstemperatur (MFT) (vgl. DIN 53 787) von höchstens 70°C, vorzugsweise von höchstens 40°C und insbesondere im Bereich von 5 bis 30°C aufweist. Beispiele für Monomere der Gruppe a) sind Methylacrylat, Ethylacrylat, n-Propylacrylat, n-Butylacrylat, i-Butylacrylat, n-Hexylacrylat, n-Octylacrylat, 2- Ethylhexylacrylat, n-Octylmethacrylat und 2-Ethylhexylmethacrylat sowie Methylmethacrylat, Ethylmethacrylat, n-Propylmethacrylat, n-Butylmethacrylat, i-Butylmethacrylat und t-Butylacrylat.

Zu den Monomeren der Gruppe b) gehören vorzugsweise monoolefinisch ungesättigte Monocarbonsäuren und Dicarbonsäuren mit 3, 4 oder 5 Kohlenstoffatomen, z. B. Acrylsäure, Methacrylsäure, Vinylessigsäure, Crotonsäure, Maleinsäure, Fumarsäure und Itaconsäure, ferner Amide und N-substituierte Amide der vorgenannten Säuren, z. B. Acrylsäureamid, Methacrylsäureamid, N-Methylolacrylsäureamid, N-Methylolmethacrylsäureamid und N-Alkyl(meth)acrylsäureamide mit 1 bis 4 Kohlenstoffatomen im Alkylrest, Monoalkylester von olefinisch ungesättigten Dicarbonsäuren mit 4 oder 5 Kohlenstoffatomen und 1 bis 8 Kohlenstoffatomen im Alkylrest, z. B. Maleinsäuremonomethylester und Maleinsäure-2-ethyl-hexylester sowie auch Salze, vorzugsweise Alkalisalze, der vorgenannten Säuren. Diese Monomeren werden einzeln oder als Gemisch eingesetzt.

Als Monomere der Gruppe c) kommen unter anderem Styrol und Vinylester in Frage, insbesondere Vinylester von linearen oder verzweigten Monocarbonsäuren mit 2 bis 12 Kohlenstoffatomen. Beispiele hierfür sind Vinylacetat, Vinylpropionat, Vinylbutyrat, Vinylisobutyrat, Vinylisononat und Vinyldecanate. Comonomere der Gruppe c) sind auch Verbindungen, die den aus der erfindungsgemäß erhaltenen Polymer-Dispersion hergestellten Filmen eine besonders gute Naßhaftung verleihen. Solche Comonomere sind Vinylpyridin sowie insbesondere olefinisch ungesättigte Verbindungen mit Acetylacetoxy-Gruppen wie Ester der Acetessigsäure, z. B. Vinylacetoacetat und Allylacetoacetat, und Acetylacetoxyalkyl-(meth-)allyl-ether mit 2 bis 5 Kohlenstoffatomen im Alkylrest, z. B. (2-Acetylacetoxy-ethyl)-allyl-ether, (2-Acetylacetoxy-propyl)-allyl-ether und (2-Acetylacetoxypropyl)-methallyl-ether (vgl. deutsche Offenlegungsschrift 2 927 932 = US-Patentschrift 4 296 226). Die Monomeren der Gruppe c) können auch im Gemisch eingesetzt werden, sofern sie copolymerisierbar sind.

Die Polymerisation wird in einem wäßrigen Medium bei einer Temperatur von 30 bis 100°C, vorzugsweise 50 bis 90°C, durchgeführt, und die Verfahrensweise kann kontinuierlich oder diskontinuierlich sein; im letzteren Fall wird ein "batch"-Verfahren, ein Monomerzudosierverfahren oder ein Emulsionszudosierverfahren angewandt.

Bevorzugt arbeitet man nach dem Emulsionszudosierverfahren, bei dem ein Gemisch aus Wasser und bis zu 20, vorzugsweise 2 bis 10 Gewichtsprozent einer wäßrigen Monomeremulsion in einem Reaktionsgefäß vorgelegt wird. Die Monomeremulsion besteht aus Wasser, den Monomeren, dem Emulgator oder den Emulgatoren, dem Initiator oder den Initiatoren und gegebenenfalls dem Regler. Die Vorlage wird auf Polymerisationstemperatur erwärmt, und nach Einsetzen der Reaktion wird der Rest der Monomeremulsion unter Einhalten der gewünschten Reaktionstemperatur und ständiger Bewegung des Reaktionsgemisches, vorzugsweise unter Rühren, zudosiert. Nach Beendigung der Zudosierung wird die Dispersion noch eine Zeitlang nachgeheizt, und nach anschließendem Abkühlen auf Raumtemperatur wird sie durch Zugabe von wäßriger Ammoniaklösung auf einen pH-Wert von mehr als 8, vorzugsweise 8,5 bis 9,5, eingestellt. Die so erhaltene Polymer-Dispersion eignet sich in besonderer Weise als Grundlage für Glanzfarben mit ausgeprägter Gelstruktur.

Die Polymerisation erfolgt in Gegenwart eines radikalbildenden Polymerisationsinitiators, der vorzugsweise in ei ner Menge von 0,1 bis 1,5 Gewichtsprozent (bezogen auf die Gesamtmonomermenge) eingesetzt wird. Der Initiator ist öllöslich oder vorzugsweise wasserlöslich.

Es eignen sich insbesondere Wasserstoffperoxid, Alkali- oder Ammoniumsalze der Perschwefelsäure, der Peroxydischwefelsäure oder der Peroxydiphosphorsäure, z. B. Natriumpersulfat, Natriumperoxydisulfat, Kaliumperoxydisulfat und Ammoniumperoxydisulfat, ferner Alkylhydroperoxide wie t-Butylhydroperoxid, Dialkylperoxide wie Di-t-butylperoxid, Diacylperoxide wie Diacetylperoxid, Dilauroylperoxid und Dibenzoylperoxid, sowie Azodiisobuttersäurenitril und Azo-γ,γ'-bis(4-cyanvaleriansäure)-Natriumsalz. Der Initiator wird gegebenenfalls zusammen mit einem Reduktionsmittel eingesetzt, insbesondere mit einem Ammoniumsalz, Alkalisalz oder Erdalkalisalz einer reduzierend wirkenden schwefelhaltigen Säure; vorzugsweise eignen sich Sulfite, Bisulfite, Pyrosulfite, Dithionite, Thiosulfate und Formaldehyd-sulfoxylate. Gegebenenfalls werden auch mehrere Initiatoren eingesetzt.

Während der Polymerisation anwesende Emulgatoren sind nichtionische oder vorzugsweise anionische Emulgatoren; die Emulgatoren werden in einer Menge von 0,2 bis 5 Gewichtsprozent (bezogen auf die Gesamtmonomermenge) verwendet. Geeignete Emulgatoren sind insbesondere Alkalisalze oder Ammoniumsalze von Alkylsulfonsäuren, Arylsulfonsäuren oder Alkylarylsulfonsäuren sowie die entsprechenden Sulfate, Phosphate oder Phosphonate, die gegebenenfalls Oxethylen-Einheiten zwischen dem jeweiligen Kohlenwasserstoffrest und der anionischen Gruppe aufweisen. Beispiele hierfür sind Natriumlaurylsulfat, Natriumoctylphenolglykolethersulfat, Natriumdodecylbenzolsulfonat, Natriumlauryldiglykolsulfat, Ammonium-t-butylphenolpentaglykolsulfat, Ammoniumtri-sec-butylphenoloctaglykolsulfat, Ammonium-n-octylphenoldiglykolsulfat, Ammoniumlauryldiglykolsulfat, Ammonium-dodecylsulfat mit 30 bis 50 Oxethylen-Einheiten und Ammonium-octylphenolsulfat mit 25 Oxethylen-Einheiten.

Der nichtionische Emulgator wird gegebenenfalls in Kombination mit einem anionischen Emulgator oder mit mehreren anionischen Emulgatoren eingesetzt. Als nichtionische Emulgatoren eignen sich insbesondere Polyglykolether von langkettigen aliphatischen Alkoholen, die vorzugsweise 10 bis 20 Kohlenstoffatome aufweisen, oder von Alkylphenolen, deren Alkylrest vorzugsweise 6 bis 12 Kohlenstoffatome enthält, oder von Dialkylphenolen oder Trialkylphenolen, deren Alkylreste vorzugsweise verzweigte Alkylreste mit jeweils 3 bis 12 Kohlenstoffatomen darstellen. Die Anzahl der Oxethylen-Einheiten liegt dabei im Bereich von 6 bis 50. Beispiele hierfür sind Umsetzungsprodukte von Ethylenoxid mit Laurylalkohol, Stearylalkohol, Oleylalkohol, Kokosfettalkohol, Octylphenol, Nonylphenol, Diisopropylphenol, Triisopropylphenol, Di-t-butylphenol und Tri-s-butylphenol. Reaktionsprodukte des Ethylenoxids mit Polypropylenglykol oder Polybutylenglykol sind ebenfalls geeignet.

Das erfindungsgemäße Verfahren wird gegebenenfalls in Gegenwart eines Reglers durchgeführt, der in einer Menge von höchstens 3 Gewichtsprozent (bezogen auf die Gesamtmonomermenge) eingesetzt wird. Als Regler eignen sich Mercaptane, insbesondere Alkylmercaptane mit 4 bis 16 Kohlenstoffatomen, z. B. n-Butylmercaptan, t-Butylmercaptan und n-Dodecylmercaptan, sowie Thioglykol, Thioglycerin und Thioglykolsäure. Gegebenenfalls werden auch mehrere Regler eingesetzt.

Die erfindungsgemäß erhältliche Polymer-Dispersion eignet sich mit besonderem Vorteil als Bindemittel für Anstrichmittel, vorzugsweise für Glanzfarben, mit ausgeprägter Gelstruktur; eine sonst übliche Zugabe von Titanchelaten ist nicht unbedingt erforderlich. Der Feststoffgehalt der Polymer-Dispersion liegt üblicherweise im Bereich von 35 bis 60, vorzugsweise 40 bis 55 Gewichtsprozent.

Bei der Herstellung von Anstrichmitteln aus den erfindungsgemäß erhältlichen Polymer-Dispersionen werden die üblichen Zusatzstoffe eingesetzt, nämlich Pigmente, Verdickungsmittel, Dispergierhilfsmittel, Entschäumer, Verlaufshilfsmittel, Filmbildehilfsmittel, Konservierungsmittel und gegebenenfalls Füllstoffe. Als Pigmente dienen insbesondere Titandioxid (Rutiltyp) sowie organische Pigmente wie Azopigmente, verlackte Azopigmente, Kupferphthalocyanin, Chinacridone und Dioxazine. Als Füllstoffe eignen sich z. B. Bariumsulfat, Calciumcarbonat, Calcium-Magnesium-Carbonat, Calcium-Magnesium-Silicat und Kaolin. Geeignete Verdickungsmittel sind die bei der Farbherstellung gebräuchlichen, ganz oder teilweise wasserlöslichen makromolekularen Substanzen wie Cellulosederivate, Homo- und Copolymere von ungesättigten Carbonsäuren in Form ihrer Alkali-, Ammonium- oder Amin-Salze und Copolmere aus Maleinsäurealkylhalbester und Alkylvinylether oder Styrol. Beispiele für Dispergierhilfsmittel sind Alkalisalze oder Ammoniumsalze von Polyacrylsäure, Polymethacrylsäure, Polyvinylsulfonsäure, Polyphosphorsäure oder von Copolymeren aus (Meth-)Acrylsäure und (Meth-)Acrylsäureestern oder von Copolymeren aus Maleinsäure und ungesättigten Kohlenwasserstoffen. Als Entschäumer werden z. B. eingesetzt aliphatische Kohlenwasserstoffe und Polysiloxan und Gemische davon, und als Verlaufshilfsmittel eignen sich insbesondere Ethandiol, Propandiol-(1,2) und 2-Methyl-n-pentandiol-(2,4). Übliche Filmbildehilfsmittel sind Glykole, Glykolether und Glykolester von Monoglykolethern, z. B. Ethylglykol, Butylglykol, Ethylglykolacetat, Butylglykolacetat und Butyldiglykolacetat sowie insbesondere 2,2,4-Trimethyl-3-hydroxypentylisobutyrat und Methoxybutanol. Geeignete Konservierungsmittel sind insbesondere Handelsprodukte, die Chloracetamid enthalten.

Bei der Anwendung solcher Anstrichfarben ist es sehr vorteilhaft, wenn die Farben eine reversible Gelstruktur haben; bei geringen Scherkräften sind sie dann einerseits so hochviskos, daß sie nicht tropfen, andererseits wird bei hohen Scherkräften, wie sie z. B. beim Pinseln, Rollen und Sprritzen auftreten, die Gelstruktur zerstört, so daß ein leichtes Verstreichen möglich ist. Dabei soll die Viskosität der Farbe einerseits so niedrig sein, daß Unebenheiten, z. B. vom Pinselauftrag herrührende Pinselstriche bzw. -furchen, sich einebnen können, aber andererseits doch so hoch, daß "Nasen-" und "Gardinenbildung" an senkrechten Flächen unterbleiben. Man erhält einen guten Verlauf.

Die Vorzüge von Anstrichfarben mit Gelstruktur gegenüber solchen mit den üblichen Fließeigenschaften bestehen darin, daß sie nicht so leicht vom Pinsel abtropfen und daß man einen dickeren Überzug aufbringen kann, ohne daß dieser ungleichmäßig oder uneben ausfällt. Eine Farbe mit Gelstruktur bricht bei heftigem Rühren oder bei starker Scherbeanspruchung, etwa beim Aufstreichen, zu einer freifließenden Flüssigkeit zusammen, d.h. die Viskosität sinkt während der Verarbeitung auf normale Werte ab, wie sie bei Farben ohne Gelstruktur üblich sind, und die Pinselstriche verfließen, wenn die Scherbeanspruchung aufhört. In Ruhe gelassen, baut die Farbe dann wieder eine Gelstruktur auf, so daß sich zwar die Pinselstriche noch einebnen können, aber beim Auftrag an senkrechten Flächen keine "Gardinen" bilden können. Außerdem gestattet eine Farbe mit derartiger Gelstruktur in einem einzigen Arbeitsgang den Farbauftrag in einer wesentlich dickeren Schicht als dies bei Farben mit normalem Fließverhalten möglich ist. Ferner kann der Anstreicher schneller und rationeller arberien, da die Verarbeitungsgeräte bei jedem Aufnehmen neuer Farbe infolge der fehlenden Tropfneigung eine größere Menge an Farbe fassen können als bei Farben mit herkömmlichen Fließeigenschaften. Wichtig ist noch die Geschwindigkeit, mit der sich die Gelstruktur in den Farben aufbaut: Sie darf einerseits nicht zu schnell erfolgen, z. B. schon im Mischgefäß bei der Farbformulierung oder der Abfüllung der Farben, andererseits aber auch nicht zu langsam, da sonst die erstrebten günstigen rheologischen Eigenschaften nicht rechtzeitig erhalten werden.

Die folgenden Beispiele dienen zur näheren Erläuterung der Erfindung. Prozentangaben beziehen sich jeweils auf das Gewicht.

**Beispiel 1**

In einem Reaktionsgefäß, das sich in einem Heizbad befindet und mit Rührer, Rückflußkühler, Tropftrichter und Thermometer ausgestattet ist, wird ein Gemisch aus 250 g Wasser und 250 g einer Monomeremulsion vorgelegt.
Die Monomeremulsion hat folgende Zusammensetzung:

| | |
|---|---|
| 764 g | Wasser |
| 550 g | Methylmethacrylat |
| 450 g | 2-Ethylhexylacrylat |
| 10 g | Methacrylsäure |
| 33 g | 50-prozentige wäßrige Lösung des Natriumsalzes eines mit 7-8 Mol Ethylenoxid ethoxylierten und sulfatierten Tri-sec-butylphenols |
| 2 g | Ammoniumperoxydisulfat |
| 5 g | Natriumcarboxymethylcellulose mit einem Substitutionsgrad von 0,57, deren 2-prozentige wäßrige Lösung bei 25°C eine Viskosität von 140 mPa·s aufweist. |

Die Monomeremulsion ist mit Hilfe von wäßriger Ammoniaklösung (25-prozentig) auf einen pH-Wert von 4 eingestellt.
Zunächst wird die Vorlage unter Rühren auf eine Temperatur von 85°C erwärmt, und dann wird der Rest der Monomeremulsion im Laufe von 150 min zudosiert. Die Temperatur des Reaktionsgemisches wird dabei auf 85°C gehalten. Anschließend wird das Gemisch noch 60 min lang bei 85°C nachgeheizt. Nach Abkühlen auf Raumtemperatur wird der pH-Wert der erhaltenen Dispersion durch Zugabe von 25-prozentiger wäßriger Ammoniaklösung auf 9 eingestellt. Die Dispersion hat einen Feststoffgehalt von 49,5 %.

**Vergleichsbeispiel 1**

Beispiel 1 wird wiederholt mit der Maßgabe, daß die Monomeremulsion nun 5 g Natriumcarboxymethylcellulose mit einem Substitutionsgrad von 1,34 enthält, deren 2-prozentige wäßrige Lösung bei 25°C eine Viskosität von 340 mPa·s aufweist. Die Dispersion hat einen Feststoffgehalt von 49,8 %.

**Beispiel 2**

Beispiel 1 wird wiederholt mit einer Monomeremulsion folgender Zusammensetzung:

| | |
|---|---|
| 764 g | Wasser |
| 530 g | Methylmethacrylat |
| 470 g | n-Butylacrylat |
| 10 g | Methacrylsäure |
| 10 g | Allylacetoacetat |
| 5 g | 50-prozentige wäßrige Lösung des Natriumsalzes eines mit 7-8 Mol Ethylenoxid ethoxylierten und sulfatierten Tri-sec-butylphenols |
| 2 g | Ammoniumperoxydisulfat |
| 2 g | n-Dodecylmercaptan |
| 3 g | Natriumcarboxymethylcellulose mit einem Substitutionsgrad von 0,45, deren 2-prozentige wäßrige Lösung eine Viskosität von 12 mPa·s aufweist. |

Die resultierende Dispersion hat einen Feststoffgehalt von 49,2 %.

**Vergleichsbeispiel 2**

Beispiel 2 wird wiederholt mit der Maßgabe, daß die Monomeremulsion nun 3 g Natriumcarboxymethylcellulose mit einem Substitutionsgrad von 1,34 enthält, deren 2-prozentige wäßrige Lösung bei 25°C eine Viskosität von 340 mPa·s aufweist. Die Dispersion hat einen Feststoffgehalt von 49,3 %.

**Beispiel 3**

In einem Reaktionsgefäß, das sich in einem Heizbad befindet und mit Rührer, Rückflußkühler, Tropftrichter und Thermometer ausgestattet ist, wird ein Gemisch aus 475 g Wasser und 61,5 g einer Monomeremulsion vorgelegt. Die Monomeremulsion hat folgende Zusammensetzung:

| | |
|---|---|
| 549 g | Wasser |
| 540 g | Methylmethacrylat |
| 460 g | n-Butylacrylat |
| 10 g | Methacrylsäure |
| 10 g | 50-prozentige wäßrige Lösung des Natriumsalzes eines mit 7-8 Mol Ethylenoxid ethoxylierten und sulfatierten Tri-sec-butylphenols |
| 5 g | Ammoniumperoxydisulfat |
| 2 g | n-Dodecylmercaptan |

Zunächst wird die Vorlage unter Rühren auf eine Temperatur von 85°C erwärmt, und dann wird der Rest der Monomeremulsion im Laufe von 150 min zudosiert. Während der letzten 75 min der Monomeremulsion-Zugabe wird eine Lösung von 45 g Natriumcarboxymethylcellulose, die einen Substitutionsgrad von 0,45 und deren 2-prozentige wäßrige Lösung bei 25°C eine Viskosriät von 12 mP·s aufweist, in 531 g Wasser zudosiert. Anschließend wird das Gemisch noch 60 min lang bei 85°C nachgeheizt. Nach Abkühlen auf Raumtemperatur wird der pH-Wert der erhaltenen Dispersion durch Zugabe von 25-prozentiger wäßriger Ammoniaklösung auf 9 eingestellt. Die Dispersion hat einen Feststoffgehalt von 40,7 %.

**Beispiel 4**

Beispiel 3 wird wiederholt mit der Maßgabe, daß nun 1 g Natriumcarboxymethyl-hydroxyethyl-cellulose, die einen Substitutionsgrad von 0,4 (Carboxymethyl) und von 0,3 (Hydroxyethyl) und deren 2-prozentige wäßrige Lösung bei 25°C eine Viskosität von 50 mPa·s aufweist, in der Vorlage enthalten ist und die Monomeremulsion nun 703 g Wasser enthält. Die resultierende Dispersion hat einen Feststoffgehalt von 46,1 %.

**Beispiel 5**

Beispiel 3 wird wiederholt mit der Maßgabe, daß nun 1 g Natriumcarboxymethyl-hydroxyethyl-cellulose, die einen Substitutionsgrad von 0,3 (Carboxymethyl) und von 0,7 (Hydroxyethyl) und deren 2-prozentige Lösung bei 25°C eine Viskosität von 33 mPa·s aufweist, in der Vorlage enthalten ist und die Monomeremulsion nun 500 g Methylmethacrylat, 500 g i-Butylacrylat und 10 g Methyacrylsäure als Monomere enthält. Die resultierende Dispersion hat einen Feststoffgehari von 45,9 %.

**Beispiel 6**

Beispiel 3 wird wiederholt mit einer Monomeremulsion folgender Zusammensetzung:

| | |
|---|---|
| 549 g | Wasser |
| 450 g | Methylmethacrylat |
| 200 g | Styrol |
| 10 g | Methacrylsäure |
| 350 g | Butylacrylat |
| 10 g | 50-prozentige wäßrige Lösung des Natriumsalzes eines mit 7-8 Mol Ethylenoxid ethoxylierten und sulfatierten Tri-sec-butylphenols |
| 5 g | Ammoniumperoxydisulfat |
| 2 g | n-Dodecylmercaptan |

Ferner wird als Schutzkolloid-Lösung eine Lösung von 5 g Natriumcarboxymethyl-hydroxyethyl-cellulose mit einem Substitutionsgrad von 0,3 (Carboxymethyl) und von 0,7 (Hydroxyethyl), deren 2-prozentige wäßrige Lösung bei 25°C eine Viskosität von 33 mPa·s aufweist, in 154 g Wasser eingesetzt. Die Zudosierung dieser Lösung beginnt 60 min nach Beginn der Zudosierung der Monomeremulsion und ist nach weiteren 90 min beendet. Die resultierende Dispersion hat einen Feststoffgehalt von 46,1 %.

**Beispiel 7**

Beispiel 3 wird wiederholt mit einer Monomeremulsion folgender Zusammensetzung:

| | |
|---|---|
| 549 g | Wasser |
| 450 g | Methylmethacrylat |
| 550 g | Ethylacrylat |
| 10 g | Methacrylsäure |
| 10 g | 50-prozentige wäßrige Lösung des Natriumsalzes eines mit 7-8 Mol Ethylenoxid ethoxylierten und sulfatierten Tri-sec-butylphenols |
| 5 g | Ammoniumperoxydisulfat |
| 2 g | n-Dodecylmercaptan |

Ferner wird als Schutzkolloid-Lösung eine Lösung von 3 g Natriumcarboxymethyl-hydroxyethyl-cellulose, die einen Substitutionsgrad von 0,4 (Carboxymethyl) und 0,3 (Hydroxyethyl) und deren 2-prozentige wäßrige Lösung bei 25°C eine Viskosität von 50 mPa·s aufweist, in 154 g Wasser eingesetzt.

Die resultierende Dispersionen hat einen Feststoffgehalt von 45,9 %.

**Beispiel 8**

Beispiel 6 wird wiederholt mit einer Monomeremulsion folgender Zusammensetzung:

| | |
|---|---|
| 549 g | Wasser |
| 100 g | t-Butylacrylat |
| 15 g | Methacrylsäure |
| 10 g | Acrylsäure |
| 10 g | 50-prozentige wäßrige Lösung des Natriumsalzes eines mit 7-8 Mol Ethylenoxid ethoxylierten und sulfatierten Tri-sec-butylphenols |
| 5 g | Ammoniumperoxydisulfat |
| 2 g | n-Dodecylmercaptan |

Die Natriumcarboxymethyl-hydroxyethyl-cellulose wird in einer Menge von 3 g eingesetzt.

Die resultierende Dispersion hat einen Feststoffgehalt von 46,4 %.

**Anwendungsbeispiele**

Aus den nach den Beispielen 1 bis 8 und den Vergleichsbeispielen 1 und 2 erhaltenen Dispersionen werden Glanzfarben hergestellt, deren Gelstruktur geprüft wird. Dazu wird zunächst jeweils eine Pigmentpaste hergestellt, indem in einem Dissolver bei einer Rührgeschwindigkeit von 6000 UPM die folgenden Bestandteile 20 min miteinander dispergiert werden:

| | |
|---|---|
| 278 g | Wasser |
| 1000 g | Propandiol-1,2 |
| 46 g | 40-prozentige wäßrige Lösung eines Polyacrylatsalzes (handelsübliches Dispergiermittel ®Dispex G 40) |
| 17,5 g | eines Gemisches aus einem aliphatischen Kohlenwasserstoff und einem Silicon (handelsüblicher Entschäumer ®Nopco NXZ) |
| 10 g | eines Ghloracetamid/Alkalifluorid-Gemisches (handelsübliches Konservierungsmittel ®Mergal AF) |
| 30 g | 25-prozentige wäßrige Natriumbenzoat-Lösung |
| 2750 g | Titandioxid (Rutiltyp, Partikelgröße 0,2-0,4 μm) (handelsübliches Pigment ®Kronos RN 63) |

Zu dem so erhaltenen Gemisch werden nach Verminderung der Rührgeschwindigkeit auf 1500 UPM die folgenden Stoffe nacheinander zugefügt:

Polymer-Dispersion gemäß Beispiel 1 bis 8 in solcher Menge, daß 3040 g Feststoff vorliegen

| | |
|---|---|
| 300 g | 2,2,4-Trimethyl-3-hydroxypentylisobutyrat |
| 200 g | 30-prozentige wäßrige Natriumpolyacrylat-Lösung (handelsübliches Verdickungsmittel ®Viscalex VG 2) |

Die so erhaltene Farbe wird jeweils bei Bedarf durch Zugabe von 25-prozentiger wäßriger Ammoniaklösung auf einen pH-Wert von 9 eingestellt. Nach einer Lagerzeit von 1 Woche wird an jeder Farbe die Gelstruktur gemessen. Als Meßgerät wird der Gel-Strength-Tester der Firma Sheen Instruments (Sales) Ltd., Richmond, verwendet; als Maß für die Gelstruktur dient das maximale Drehmoment (g/cm) an einem in die Farbe eingetauchten Plattenrührer beim Brechen der Gelstruktur. Ferner wird der Reflektionswert von Filmen, die aus den Farben auf Glas hergestellt und 1 Woche lang bei Raumtemperatur getrocknet worden sind, mit einem handelsüblichen Glanzmeßgerät unter einem Winkel von 20 Grad und 60 Grad

gemessen.

Die Meßwerte sind in der nachstehenden Tabelle zusammengestellt (Gelstruktur① und Reflektionswert①). Die Tabelle enthält ferner die Meßwerte für analoge Farben, die zusätzlich jeweils 35 g eines handelsüblichen Titanchelats (Tilcom AT 23) enthalten (Gelstruktur② und Reflektionswert②).

**Tabelle**

| Polymer-Dispersion gemäß Beispiel | Gelstruktur① (g/cm) | Reflektionswert① 20 Grad | 60 Grad | Gelstruktur② (g/cm) | Reflektionswert② 20 Grad | 60 Grad |
|---|---|---|---|---|---|---|
| 1 | 37 | 38 | 81 | 55 | 40 | 80 |
| 2 | 74 | 55 | 83 | 248 | 60 | 85 |
| 3 | 75 | 24 | 64 | 122 | 22 | 62 |
| 4 | 13 | 64 | 83 | 101 | 55 | 81 |
| 5 | 24 | 61 | 83 | 57 | 57 | 80 |
| 6 | 336 | 41 | 83 | 450 | 26 | 75 |
| 7 | 243 | 33 | 77 | 258 | 36 | 77 |
| 8*) | 264 | 53 | 77 | 266 | 57 | 78 |
| Vergleich 1 | 5 | 47 | 80 | 16 | 51 | 82 |
| Vergleich 2 | 26 | 35 | 81 | 24 | 36 | 80 |

*) Die Menge des Filmbildehilfsmittels beträgt hier 500 g.

**Patentansprüche**

1. Verfahren zur Herstellung einer Polymer-Dispersion durch Polymerisieren
a) eines Esters oder mehrerer Ester der Acrylsäure und/oder der Methacrylsäure mit einem 1 bis 10 Kohlenstoffatome aufweisenden Alkohol,
b) 0,1 bis 10 Gewichtsprozent (bezogen auf die Gesamtmonomermenge) mindestens einer wasserlöslichen, ungesättigten Carbonsäure oder eines wasserlöslichen Derivats einer ungesättigten Carbonsäure und
c) 0 bis 30 Gewichtsprozent (bezogen auf die Gesamtmonomermenge) mindestens einer von den vorgenannten Komponenten a) und b) verschiedenen monoolefinisch ungesättigten Verbindung
in einem wäßrigen Medium bei einer Temperatur von 30 bis 100°C in Gegenwart von radikalbildendem Polymerisationsinitiator, Emulgator, Schutzkolloid und gegebenenfalls Regler, dadurch gekennzeichnet, daß man als Schutzkolloid wasserlösliche Carboxymethylcellulose mit einem mittleren Substitutionsgrad von 0,3 bis 0,65 verwendet.

2. Verfahren nach Anspruch 1, dadurch gekennzeichnet, daß man die Carboxymethylcellulose in einer Menge von 0,1 bis 5 Gewichtsprozent (bezogen auf die Gesamtmonomermenge) einsetzt.

3. Verfahren nach Anspruch 1, dadurch gekennzeichnet, daß man eine Carboxymethylcellulose verwendet, deren 2-gewichtsprozentige wäßrige Lösung bei einer Temperatur von 25°C eine Viskosität von 1 bis 10 000 mPa·s aufweist.

4. Verfahren nach Anspruch 1, dadurch gekennzeichnet, daß man eine Carboxymethylcellulose verwendet, die zusätzlich einen 1 bis 3 Kohlenstoffatome aufweisenden Alkyl- oder Hydroxyalkylrest, einen 2 bis 6 Kohlenstoffatome aufweisenden Alkoxyalkylrest oder einen 2 bis 6 Kohlenstoffatome aufweisenden Dialkylaminrest enthält.

5. Polymer-Dispersion, erhältlich nach dem Verfahren gemäß Anspruch 1.

6. Verwendung der nach Anspruch 1 hergestellten Polymer-Dispersion als Bindemittel für eine Glanzfarbe mit Gelstruktur.

7. Glanzfarbe mit Gelstruktur auf der Grundlage einer Polymer-Dispersion, dadurch gekennzeichnet, daß die Polymer-Dispersion eine Polymer-Dispersion gemäß Anspruch 5 ist.

**Claims**

1. A process for the preparation of a polymer dispersion by polymerizing
a) one or more esters of acrylic acid and/or methacrylic acid with an alcohol containing 1 to 10 carbon atoms,
b) 0.1 to 10 percent by weight (relative to the total quantity of monomers) of at least one water-soluble, unsaturated carboxylic acid or a water-soluble derivative of an unsaturated carboxylic acid and
c) 0 to 30 per cent by weight (relative to the total quantity of monomers) of at least one monoolefinically unsaturated compound which is different from the above-mentioned components a) and b),

in an aqueous medium, at a temperature of 30 to 100°C and in the presence of a polymerization initiator which forms free radicals, an emulsifier, a protective colloid and, if appropriate, a chain regulator, which comprises using water-soluble carboxymethylcellulose having an average degree of substitution of 0.3 to 0.65 as the protective colloid.

2. The process as claimed in claim 1, wherein the carboxymethylcellulose is employed in an amount of 0.1 to 5 per cent by weight (relative to the total quantity of monomers).

3. The process as claimed in claim 1, wherein a carboxymethylcellulose is used a 2 per cent strength by weight aqueous solution of which has a viscosity of 1 to 10,000 mPa·s at a temperature of 25°C.

4. The process as claimed in claim 1, wherein a carboxymethylcellulose is used which addtionally contains an alkyl or hydroxyalkyl radical having 1 to 3 carbon atoms, an alkoxyalkyl radical having 2 to 6 carbon atoms or a dialkylamine radical having 2 to 6 carbon atoms.

5. A polymer dispersion which can be obtained by the process as claimed in claim 1.

6. Use of the polymer dispersion prepared as claimed in claim 1 as a binder for a gloss paint having a gel structure.

7. A gloss paint having a gel structure, based on a polymer dispersion wherein the polymer dispersion is a poly mer dispersion as claimed in claim 5.


## Revendications

1. Procédé de préparation d'une dispersion de polymère par polymérisation:
   a) d'un ester ou de plusieurs esters dérivant de l'acide acrylique et/ou de l'acide méthacrylique et d'un alcool contenant de 1 à 10 atomes de carbone,
   b) de 0,1 à 10 % en poids (par rapport à la quantité totale des monomères) d'au moins un acide carboxylique insaturé soluble dans l'eau ou d'au moins un dérivé hydrosoluble d'un acide carboxylique insaturé et
   c) de 0 à 30 % en poids (par rapport à la quantité totale des monomères) d'au moins un composé monoéthylénique différent des composantes a) et b) mentionnées ci-dessus,
   en milieu aqueux, à une température de 30 à 100°C et en présence d'un amorceur de polymérisation engendrant des radicaux, d'un émulsionnant, d'un colloïde protecteur et, éventuellement d'un régulateur, procédé caractérisé en ce qu'on utilise, comme colloïde protecteur, une carboxyméthyl-cellulose hydrosoluble qui a un degré de substitution moyen compris entre 0,3 et 0,65.

2. Procédé selon la revendication 1 caractérisé en ce que la carboxyméthyl-cellulose est mise en jeu en une quantité de 0,1 à 5 % en poids (par rapport à la quantité totale des monomères).

3. Procédé selon la revendication 1 caractérisé en ce qu'on utilise une carboxyméthyl-cellulose dont la solution aqueuse à 2 % en poids présente, à une température de 25°C, une viscosité de 1 à 10 000 mPa·s.

4. Procédé selon la revendication 1 caractérisé en ce qu'on utilise une carboxyméthyl-cellulose qui contient en outre un radical alkyle ou hydroxyalkyle renfermant de 1 à 3 atomes de carbone, un radical alcoxyalkyle renfermant de 2 à 6 atomes de carbone ou un radical dialkylamino renfermant de 2 à 6 atomes de carbone.

5. Dispersion de polymère qui peut être obtenue par le procédé de la revendication 1.

6. Application de la dispersion de polymère préparée selon la revendication 1 comme liant pour une peinture brillante à structure de gel.

7. Peinture brillante à structure de gel à base d'une dispersion de polymère, peinture caractérisée en ce que la dispersion de polymère est une dispersion de polymère selon la revendication 5.